# EUROPEAN PATENT SPECIFICATION

(11) **EP 1 664 190 B1**
(45) Date of publication and mention of the grant of the patent: **13.08.2008**
(21) Application number: 04768203.4
(22) Date of filing: 31.08.2004
(51) Int. Cl.: C08L 25/06, B29D 22/00, C08J 5/18

(54) **GLASS-LIKE BOTTLE WITH IMPROVED SAFETY CHARACTERISTICS**
GLASARTIGE FLASCHE MIT VERBESSERTEN SICHERHEITSEIGENSCHAFTEN
BOUTEILLE RESSEMBLANT VERRE A CARACTERISTIQUES DE SECURITE AMELIOREES

(30) Priority: 11.09.2003 GB 0321287; 11.09.2003 GB 0321286
(43) Date of publication of application: 07.06.2006
(73) Proprietor: Safeglass (Europe) Limited, Glasgow G75 0QR (GB)
(72) Inventor: McNEILL, Ralph, Safeglass Europe Limited, East Kilbride, Glasgow G1 2DT (GB)
(86) International application number: PCT/GB2004/003647
(87) International publication number: WO 2005/026256

(56) References cited:
- WO-A-94/29383
- WO-A-97/15868
- WO-A-99/50347
- DE-A- 2 239 356
- GB-A- 1 325 726
- ABETZ V ET AL: "THE GLASS TRANSITION OF MIXTURES OF POLYSTYRENE WITH ALKYL-TERMINATED OLIGOSTYRENE - EXPERIMENTAL EVIDENCE FOR MICROPHASE SEPARATION IN A POLYMER BLENS" MACROMOLECULAR CHEMISTRY AND PHYSICS, WILEY VCH, WEINHEIM, DE, vol. 196, no. 11, 1 November 1995 (1995-11-01), pages 3845-3857, XP000583913 ISSN: 1022-1352

## Description

The present invention relates to bottles made of a glass-like material which has improved safety characteristics compared to ordinary glass.

In the present Application references to a "glass-like" material refer to a material having the following characteristics; clarity, brittleness, low strain to failure and rigidity.

Ordinary glass is used in a variety of everyday applications.

However an inherent problem lies in the manner in which the glass can be broken.

Breakage of glass results in the production of sharp glass fragments and splinters, which can cause injury

The glass may also be broken by malicious or accidental damage. Whilst the glass fragments can be removed and the retaining glass replaced, there is an interim risk of injury to persons coming into contact with the broken fragments.

Considerable research has been conducted to find materials which can be used in Applications similar to glass but which minimise the risk of damage to persons in the instance of the material being broken either intentionally or accidentally. Safety glass i.e. toughened glass, materials are well known in the art and have numerous applications and uses. Most have enhanced safety by virtue of being reinforced in strength, such that they have a higher stress to failure than glass; in other words a greater force is needed to shatter or break them than would be required with ordinary glass. Uses vary from windows and doors on automobiles and public transport, to domestic uses such as shower enclosures and room partitions.

For example the polymeric materials Perspex^{™} and Plexiglass^{™,} are transparent like glass, and do not pose the same risk of injury when broken. However, these materials can be harder to break than glass and can still produce sharp fragments when broken.

In addition, the containers in which alcoholic drinks, carbonated soft drinks and oxygen sensitive juices are sold are also traditionally manufactured from glass. Glass bottles are well received by consumers as they impart the impression of a high quality product and have "chink factor". Nevertheless, the use of bottles is inherently dangerous, as glass is easily broken. It will be appreciated that this is a particular problem in bars, pubs and nightclubs, where accidental breakage of glass bottles, is a potential health risk.

Glass bottles are also disliked as they can be used deliberately, as weapons, to inflict damage on other persons. In fact, safety regulators have actively encouraged drinks manufacturers, as well as establishments which serve drinks and alcohol, to use bottles and glasses made from non-dangerous materials, in order to reduce the number of serious injuries caused by glass and bottle attacks.

In recent years there has been a move towards providing bottles manufactured from materials which are not as dangerous as glass. It is estimated that packaged beer production world wide in 1996 was 106.6 billion litres, requiring 186.2 billion bottles and 73.7 billion cans. The beer bottle market was forecasted to grow at an annual rate of three percent through 2001 to 216 billion units. Most bottle production makes use of glass with only 0.1 billion plastic bottles being utilised in 1996. However due to the push towards increased safety it is estimated that the demand for plastic bottles is forecast to reach 2.5 billion by 2006.

The focus on safer bottles is particularly important with respect to alcoholic drinks, which are consumed in bars and nightclubs. PET, poly(ethylene terephthalate), a plastic which can be readily manufactured into bottles, and which does not break as readily as glass, has already been used for this purpose.

However the use of PET poses its own problems to the industry. PET is a relatively expensive material and not cheap to process which makes it a less popular option for drinks manufacturers. In addition, there is a general consensus that plastic bottles are not as well received by the public as they feel cheaper and do not have the same high quality feel as glass.

Bottles made of a material that shatters when broken into fragments which do not cut, puncture or otherwise damage human skin or tissue, wherein the material is comprised of a mixture of an amorphous thermoplastic polymer and a low molecular weight resin are known from WO-A-9950347.

It is an object of the present invention to provide the bottles of WO-A*-*9950347 with oxygen barrier properties.

These bottles are made of a material which shatters, when broken, into fragments which do not cut, puncture or otherwise damage human skin or tissue, wherein the material is comprised of an amorphous thermoplastic polymer and one or more low molecular weight resins. The bottles comprise an oxygen barrier of acrylonitrile-methyl acrylate copolymer. The material is comprised of a simple mixture of amorphous thermoplastic polymer and one or more low molecular weight resins.

Preferably the amorphous thermoplastic polymer is chosen from the group consisting of polystyrene (PS), polymethyl methacrylate (PMAA), styrene-acrylonitrile copolymer (SAN), linear polyesters and co-polyesters and polycarbonate (PC).

The one or more low molecular weight resins chosen will be completely compatible with the chosen polymer. For example in the case of polystyrene the low molecular weight resin is typically C9 aromatic hydrocarbon resin.

Preferably the material has a tensile stress limit of between 11 and 60 Nmm-².

The low molecular weight resin will have a Mn (number average molecular weight) such that it has less than 500 repeating units, and preferably less than 50 repeating units.

The material may be manufactured in sheet form.

Preferably the one or more low molecular weight resins are hydrocarbon resins.

Preferably the one or more low molecular weight resins are aromatic hydrocarbon resins.

Preferably the material is comprised of a simple mixture of polystyrene and one or more low molecular weight resins.

Preferably the one or more low molecular weight resins are hydrocarbon resins.

Preferably the one or more low molecular weight resins are aromatic hydrocarbon resins.

Most preferably the one or more low molecular weight hydrocarbon resins are C9 aromatic hydrocarbon resins.

Preferably the one or more low molecular weight resins are, or are derived from, alpha methyl styrene.

Preferably the one or more low molecular weight hydrocarbon resins are selected from a group consisting of; Norsolene™, Kristalex™Plastolyn™ Endex™, Piccotex™, Piccolastic™, Sukorez™ or Arson™.

Most preferably the one or more low molecular weight hydrocarbon resins are selected from a group consisting of; Norsolene W90™, Norsolene W100™, Norsolene W110™, Kristalex F85™, Kristalex F100™, Kristalex F115 ™, Plastolyn 240™, Plastolyn 290™, Endex 155 ™, Piccolastic D125™, Sukorez 100™, Sukorez 120™, Arkon P100™, Arkon P125™, Arkon P140™, Piccotex 75™ Piccotex 100™ or Piccotex 120™.

Optionally the material may also include UV inhibitors, antioxidants, flow modifiers, fire retarding agents, colour pigments and brighteners as known in the art.

Preferably as the polystyrene is mixed with the one or more low molecular weight hydrocarbon resins, the glass transition temperature (Tg) of the material is elevated. Typically the Tg is elevated to 5-10 degress C higher than the base polymer.

According to the present invention, there is provided a bottle manufactured from a material that shatters when broken into fragments which do not cut, puncture or otherwise damage human skin or tissue.

The bottle may be manufactured from the material using injection blow moulding and/or injection stretch blow moulding techniques.

Alternatively, the bottle may be manufactured from the material using extrusion blow moulding.

The material of the bottle also The material of the bottle also comprises an oxygen barrier. The material of the bottle may also comprise oxygen scavengers.

The barrier included in the material of the bottle is an acrylonitrile-methyl acrylate copolymer

Preferably the barrier is Barex^{™}. Most preferably the barrier is Barex^{™} 210 or Bares^{™} 218.

The barrier may be overmoulded onto the bottle or alternatively may be included in the material of the bottle, using co-injection techniques.

The bottle may also have an inorganic coating. This may be a thin layer of amorphous carbon. The inorganic coating may be applied to the inside surface of the bottle. Typically the inorganic coating will be applied in a layer of 100 to 200nm thickness. The layer may be applied by spraying.

The bottle may also have an external organic coating. The external organic coating may be PVDC or a two component epoxyamine.

The bottle may be manufactured from multiple layers of the material. Two or more layers of the bottle may be combined to act as an improved oxygen barrier.

Optionally the material of the bottle may also include UV inhibitors, antioxidants, flow modifiers, colour pigments and brighteners as known in the art.

Preferably as the amorphous thermoplastic polymer is mixed with the one or more low molecular weight hydrocarbons, the glass transition temperature is elevated. Preferably the material of the bottle has a glass transition temperature of above 80°C.

The material herein described can be used as a substitute for ordinary glass. The material is glass-like in character having clarity, brittleness, low strain to failure and rigidity. The material can be manufactured in sheet form, by extrusion, and moulded into the shape of a bottle by injection moulding or other standard melt processes.

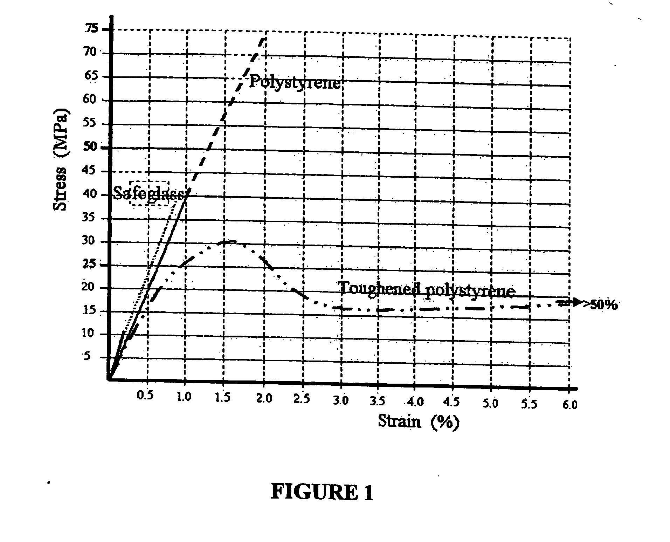

Table 1 shows the stress-strain behaviour of the material in comparison to other polystyrene materials. Figure 1 shows this information in the form of a graph.

| Table : Comparison of Properties of Safeglass™ to Polystyrenes. | | | | | | |
|---|---|---|---|---|---|---|
| Polymer Type: | Modulus / GPa | Yield stress / MPa | Yield strain / % | Stress at break / MPa | Strain at break / % | Vicat softening temperature |
| Polystyrene (i.e. "crystal" or GPPS) | 3.0 - 3.2 | Brittle - no yield | | 4- - 75 | 2 | 82 - 98 |
| Toughened polystyrene (e.g. HIPS) | 1.6 - 2.4 | 18 -38 | 1.5 | < yield | 15 - >50 | 76 -95 |
| Safeglass™ | 3.1**-** 3.4 | Brittle - no yield | | 8 - 40 | 1 - 2 | 95 - 104 |

N.B. Safeglass^{™} materials are slighly more rigid and certainly more brittle than conventional "crystal"polystyrene. Modified polystyrenes are invariably less rigid and tougher materials as a result of blending with a rubbery (low Tg) additive. This also results in a lowering of the Glass Transition Temperature (Tg) as witnessed by the reduction in the Vicat Softening Temperature. The reverse is true of Safeglass^{™} materials which show no such decrease in Tg, indeed it can be higher than the critical temperature.

The material is fundamentally a blend of a rigid and normally brittle amorphous thermoplastic with a glass transition temperature Tg at least 5° C above ambient and one or more compatible low molecular weight resins.

An embodiment of the material will now be described.

A rigid and normally brittle amorphous thermoplastic polymer is blended with one or more low molecular weight resins which have a Mn (number average molecular weight) such that the resin has less than 500 repeating units, preferably less than 50 repeating units. The one or more low molecular weight resins have a weight average molecular weight of 6050 or below.

The material is manufactured by mixing or blending a clear polymer with one or more low molecular weight hydrocarbon resins. The polymer is an amorphous thermoplastic and can be chosen from the group of polystyrene, (PS), polymethyl methacrylate (PMAA), styrene-acrylonitrile copolymer (SAN), linear polyesters and co-polyesters and polycarbonate (PC). It is important that the low molecular weight resin is completely compatible with the chosen polymer. For example in the case of polystyrene it is C9 aromatic hydrocarbon resin.

In the herein described embodiment polystyrene is used.

The one or more low molecular weight resins which are mixed with the polystyrene are aromatic hydrocarbon resins and typically C9 aromatic hydrocarbon resins. The one or more resins are typically alpha methyl styrene or vinyl toluene or derivatives thereof. These are selected from the following group: Norsolene W90™, Norsolene W100™, Norsolene W110™, Kristalex F85™, Kristalex Floor™, Kristalex F115™, Plastolyn 240™, Plastolyn 290™, Endex 155™, Piccolastic D125™, Sukorez 100™, Sukorez 120™, Arkon P100™, Arkon P125™, Arkon P140™, Piccotex 75™, Piccotex 100™ or Piccotex 120™.

By blending polystyrene with one or more of the abovementioned low molecular weight hydrocarbon resins, a hard, rigid material is formed which has the appearance and feel of glass, but which is extremely brittle and has low strain to failure. The material also has the inherent advantage that when broken, unlike glass, the material breaks into fragments which are not sharp and do not injure skin or tissue. The material is, by design, manufactured to break between 11 and 60 Nmm⁻² . Therefore the material, when provided as a substitute to glass advantageously shatters into fragments or pieces which are not sharp and are not capable of cutting or puncturing human skin. Due to the inherent advantages of the material it is envisaged that it may have a variety of other uses, for example it may have application in novelty toys, such as stress relief toys, or have uses in "stunt" apparatus in, for example, theatres, shows or on film sets.

The material is manufactured by conventional melt compounding techniques. As the polystyrene is mixed with the one or more low molecular weight hydrocarbon resins, the glass transition temperature (Tg) of the material is elevated as the low molecular weight resin does not have a plasticising effect, the opposite effect is seen as the glass transition temperature of the material is elevated.

The material is generally transparent or clear, however dyes may be added to change the appearance of the material.

Low molecular weight in resins is a function of the length of the chains in the resin. In this case the hydrocarbon resins have a very low molecular weight, too low in fact for the resins to be of any use on their own, and are difficult to mould. By mixing low molecular weight hydrocarbon resin with polystyrene, the stress limit of the polystyrene is reduced giving the material the characteristics described in the present application. The low molecular weight resin will have a Mn (number average molecular weight) such that it has less than 500 repeating units, and preferably less than 50 repeating units.

The following are examples of this material.

### Material 1

In order to achieve a material with a stress limit of 24 MPa, a 50% mix of polymer and 50% resin is used, which achieve this stress limit. Typically the polymer could be crystal polystyrene such as Polystyrol^{™} 143E, and resin Plastolyn^{™} 240.

### Material 2

In order to achieve a material with a stress limit of 34 MPa, a 60% mix of polymer and 40% resin is used, which achieves this stress limit. Typically the polymer could be crystal polystyrene such as Polystyrol™ 143E, and resin Plastolyn™ 240.

A bottle having improved safety characteristics can be manufactured from the material comprised of an amorphous thermoplastic polymer and one or more resins. The resins are aromatic hydrocarbon resins and are selected from a group consisting of Norsolene™, Krystalex™, Plastolyn ™, Endex™, Sokorez™, Arkon™, Piccolastic™ and Piccotex™, and in particular Norsolene W90™, Norsolene W100™, Norsolene W110™, Kristalex F85™, Kristalex F100 ™, Kristalex F115™, Plastolyn 240™, Plastolyn 290™, Endex 155™, Piccolastic D125™, Sukorez 100™, Sukorez 120 ™, Arkon P100 ™, Arkon P125 ™, Arkon P140 ™, Piccotex 75™, Piccotex 100™ or Piccotex 120™. In a particular embodiment the one or more low molecular weight resins are C9 hydrocarbon resins with an *M̅*ₙ (number average molecular weight) such that it has less than 500 repeating units and preferably less than 50 repeating units. The resin or resins chosen will be selected on compatibility with the chosen polymer.

Low molecular weight in resins is a function of the length of the chains in the resin. In this case the hydrocarbon resins have a very low molecular weight, too low in fact for the resins to be of any use as a structural plastics material on their own, and are difficult to mould. By mixing low molecular weight hydrocarbon resin with polystyrene, the stress limit of the polystyrene is reduced giving the material the characteristics described in the present application.

The amorphous thermoplastic polymer is chosen from the group consisting of polystyrene (PS, styrene-acrylonitrile co-polymer (SAN), linear polyesters and co-polyesters and polycarbonate (PC). These can be mixed, blended or polymerised with the one or more low molecular weight resins. UV inhibitors, dyes, antioxidants, flow modifiers, colour pigments and brighteners can also be added to change or adapt the appearance of the bottle.

The bottle herein described has many characteristics similar to an ordinary glass bottle - i.e. clarity, rigidity and brittleness. However when broken, the bottle shatters into fragments which are harmless and cannot be used to cut or pierce human skin.

The material used to manufacture the bottle is fundamentally a blend of a rigid and normally brittle amorphous thermoplastic with a glass transition temperature Tg at least 50° C above ambient and one or more compatible low molecular weight resins. A rigid and normally brittle amorphous thermoplastic polymer is blended with one or more low molecular weight resins which have a *M̅ₙ̅* (number average molecular weight) such that the resin has less than 500 repeating units, preferably less than 50 repeating units. The one or more low molecular weight resins have a weight average molecular weight of 6050 or below. The material is, by design, manufactured to break between 11 and 60 Nmm⁻²

The material can be heated and made into the desired shape of the bottle, by any suitable technique known to the art e.g. injection moulding, extrusion blow moulding or pre-form injection blow moulding techniques.

The bottle may be manufactured from one or more layers of the material. More than one layer may be used to provide improved oxygen barrier characteristics.

As the bottle described herein is manufactured from the material at lower processing temperatures than conventional plastics, barriers which are not usually suitable for this purpose can be used. For example the bottle may suitably comprise Barex™(acrylonitrile-methyl (acrylonitrile-methyl acrylate copolymer), and in particular 210 or Barex™ 218, which has high oxygen barrier properties. This can be achieved either by overmoulding or co-injection techniques. The barrier could be provided on the inside or outside of the bottle.

Oxygen scavengers such as all polyester Amosorb 3000 or X-312 scavenger may be used. These Oxygen scavenging materials can be incorporated into the material of the bottle to react with the gas before it reaches the contents.

The bottle may also have an inorganic coating such as amorphous carbon. This can be sprayed onto the surface of the bottle being coated. The inorganic coating can be applied either to the inside or outside of the bottle after blowing. Plasma-applied coatings, using carbon or silicon, which have recently been developed, may be used. The Sidel Actis^{™} and Kirin DLC^{™} coating technologies can be used produce a thin layer of amorphous carbon, typically 100 to 200nm thick, on the inside surface of the botte. This is deposited from a high-energy plasma of acetylene gas within a high vacuum environment. The coating provides an excellent barrier to both O₂ and CO₂, and, because it is on the inside of the bottle, prevents the O₂ dissolved in the material of the bottle from migrating into the contents of the bottle during the first few weeks of storage.

Because the deposited layers are fundamentally brittle, they have to be extremely thin in order not to flake off under container stresses, caused by bottle expansion and creep when the bottle is filled, and under pressure from the contents. Other factors include damage and scuffing due to bottle handling, but these clearly do not affect the integrity of the coating if it is on the inside. The barrier performance improvements of carbon coatings are similar to those achieved by organic coatings, again giving a longer potential retail shelf life of around nine months.

Silica technologies such as Glaskin and BestPet can also be used. These rely on the application of a SiOₓ vacuum plasma coating, to give a barrier layer between 40 and 60nm thick. While the Glaskin process applies the glass clear coating to the inside of the bottle, the BestPet technique applies it to the outside.

Additionally, an organic coating may be used. External organic coatings have been known and used in the industry since the early 1980s. In the mid 1990s, barrier coating solutions based on two component epoxyamine chemistry (Bairocade) were developed, first to lengthen the shelf life of the smaller soft drink sizes in hotter climates, and then for beer. These provide a transparent, glossy, external spray coating which is an excellent barrier to migration of CO₂ and O₂, and is unaffected by humidity. The low temperature thermoset cure provides a tough film, robust to filling and handling conditions.

Typically the coating will be applied to the bottle at thicknesses between 6µm and 10µm, and allow the use of standard resins and preforms with existing injection and blow moulding equipment. The use of such coatings provides a performance improvement which is around 19 times better than an uncoated bottle and translates into a longer retail shelf life. The external organic coating may be PVDC two component epoxyamine.

An additional improvement to the gas permeation properties of the bottle material can be obtained by manufacturing it from multiple layers of the material. In other words, two or more layers of the material may be combined to act as an improved oxygen barrier. Final shape blowing produces a bottle with up to seven different polymer layers, which either act as a physical barrier to gas permeation, or are chemically active in scavenging oxygen from the material of the bottle and intercepting oxygen diffusing in from outside.

The material herein described has an elevated glass transition temperature, which is much higher than the glass transition temperature of, for example, PET. PET has a glass transition temperature that is lower than the pasteurisation temperature used in the beer industry. As a result when PET is used in the manufacture of bottles, creep may occur during filling. In other words the material expands, which causes deformity of the bottle. This problem is eliminated using the material herein described as the glass transition temperature is above the pasteurisation temperature used during filling.

Furthermore, bottles made from PET are generally filled using flash pasteurisation, as opposed to full pasteurisation, which the industry prefers. Full pasteurisation is generally more efficient which results in a longer shelf life for the product. However full pasteurisation is not generally used with PET materials.

A particular advantage of the bottles herein described is that because they have an elevated glass transition temperature, they can withstand full pasteurisation.

It has been discovered that using the above described material a can be manufactured which does not cut, puncture or otherwise damage human skin or tissue when broken. In other words, the bottle will shatter into harmless fragments, shards or pieces when broken.

A particular advantage of the bottle described herein, lies in the fact that even though it does not shatter into dangerous fragment when broken, it has a similar quality feel as glass, and has improved aesthetic qualities over existing plastics such as PET. The material herein described for use in manufacturing a bottle, is relatively light and glass-like to touch and as it is a polymer it can be processed by including oxygen barriers during production. Importantly, the material is thicker than an equivalent PET bottle so has a more glass-like feel but can be manufactured into bottles without an increase in cost.

Potential uses of the bottle are not limited. For example, the bottle may be used for beer, carbonated soft drinks, oxygen sensitive juices, beverages or milk

## Claims

1. A bottle manufactured from a material that shatters when broken into fragments which do not cut, puncture or otherwise damage human skin or tissue, wherein the material is comprised of a mixture of an amorphous thermoplastic polymer and one or more low molecular weight resins, having a number average molecular weight (Mn) such that it has less than 500 repeating units, and wherein the bottle comprises an oxygen barrier, comprising of acrylonitrile-methyl acrylate copolymer.

2. A bottle as claimed in Claim 1, wherein the amorphous thermoplastic polymer is chosen from the group consisting of: polystyrene (PS), styrene-acrylonitrile co-polymer (SAN), linear polysters and co-polyesters and polycarbonate (PC).

3. A bottle as claimed in any preceding Claim,
wherein the one or more low molecular weight resins are hydrocarbon resins.

4. A bottle as claimed in Claim 3, wherein the one or more low molecular weight resins are aromatic hydrocarbon resins.

5. A bottle as claimed in Claim 4, wherein the amorphous thermoplastic polymer is polystyrene and the aromatic hydrocarbon resins are C9 aromatic hydrocarbon resins.

6. A bottle as claimed in Claim 5, wherein the aromatic hydrocarbon resins are, or are derived from, alpha methyl styrene.

7. A bottle as claimed in any preceding Claim,
wherein the low molecular weight resin will have an Mn (number average molecular weight) such that it has less than 50 repeating units.

8. A bottle as claimed in any preceding Claim,
wherein the material has a tensile stress limit between 11 and 60 Nmm⁻².

9. A bottle as claimed in any preceding Claim, manufactured from multiple layers of the material.

10. A bottle as claimed in any preceding Claim,
wherein the material includes one or more additives selected from the group consisting of UV inhibitors, antioxidants, flow modifiers, colour pigments and brighteners.

11. A bottle as claimed in any preceding Claim,
wherein the glass transition temperature of the material rises as the amorphous thermoplastic polymer is mixed with the one or more low molecular weight hydrocarbons.

12. A bottle as claimed in any preceding Claim,
wherein the material has a glass transition temperature of above 80°C.

13. A method of manufacturing a bottle from one or more layers of a material which shatters, when broken, into fragments which do not cut, puncture or damage human skin or tissue, the method comprising the steps of: mixing an amorphous thermoplastic polymer and one or more low molecular weight resins having a number averabe molecular weight (Mn) such that it has less than 500 repeating units adding an oxygen barrier, comprising of acrylonitrile-methyl acrylate copolymer, and making the materials into the shape of the bottle.

14. A method as claimed in Claim 13, wherein the amorphous thermoplastic polymer is chosen from the group consisting of polystyrene (PS) polymethyl methacrylate (PMAA), styrene-acrylonitrile copolymer (SAN), linear polyesters and co-polyesters and polycarbonate (PC).

15. A method as claimed in Claims 13 or 14, wherein the one or more low molecular weight resins are hydrocarbon resins.

16. A method as claimed in Claim 15, wherein the hydrocarbon resins are aromatic hydrocarbon resins.

17. A method as claimed in Claim 16 wherein the amorphous thermoplastic polymer is polystyrene and the aromatic hydrocarbon resins are C9 aromatic hydrocarbon resins.

18. A method as claimed in Claim 17, wherein the aromatic hydrocarbon resins are, or are derived from, alpha methyl styrene.

19. A method as claimed in Claims 13 to 18 wherein the low molecular weight resin has an Mn (number average molecular weight) such that it has less than 50 repeating units.

20. A method as claimed in Claims 13 to 19 wherein the glass transition temperature (Tg) of the material rises as the amorphous thermoplastic polymer is mixed with one or more low molecular weight hydrocarbon resins.

21. A method as claimed in Claim 20 when the Tg rises to 5-10°C higher than the base polymer.

22. A method as claimed in Claims 13 to 21 comprising the additional step of adding one or more additives selected from the group consisting of UV inhibitors, antioxidants, flow modifiers, fire retarding agents, colour pigments and brighteners and oxygen scavengers.

23. method as claimed in Claims 13 to 22, wherein the material is formed into the desired shape using injection blow moulding and/or injection stretch blow moulding techniques.

24. A method as claimed in Claims 13 to 22, wherein the material is formed into the desired shape using extrusion blow moulding.

## Patentansprüche

1. Flasche, hergestellt aus einem Material, das beim Zerbrechen in Fragmente zersplittert, die die menschliche Haut oder das menschliche Gewebe nicht schneiden, durchstechen oder auf andere Weise verletzen, wobei das Material aus einer Mischung eines amorphen thermoplastischen Polymers und einem oder mehreren niedermolekularen Harz(en) besteht, das bzw. die ein derartiges zahlendurchschnittliches Molekulargewicht (Mn) aufweisen, dass es bzw. sie weniger als 500 Wiederholungseinheiten aufweist bzw. aufweisen, und wobei die Flasche eine Sauerstoffsperre umfasst, die aus Acrylnitrilmethylacrylat-Copolymer besteht.

2. Flasche nach Anspruch 1, wobei das amorphe thermoplastische Polymer aus der Gruppe ausgewählt wird bestehend aus: Polystyrol (PS), Styrol-Acrylnitril-Copolymer (SAN), linearen Polyestern und Copolyestern und Polycarbonat (PC).

3. Flasche nach einem der vorhergehenden Ansprüche, wobei das eine oder die mehreren niedermolekularen Harze Kohlenwasserstoffharze ist bzw. sind.

4. Flasche nach Anspruch 3, wobei das eine oder die mehreren niedermolekularen Harz(e) aromatische Kohlenwasserstoffharze ist bzw. sind.

5. Flasche nach Anspruch 4, wobei das amorphe thermoplastische Polymer Polystyrol ist und die aromatischen Kohlenwasserstoffharze aromatische C9-Kohlenwasserstoffharze sind.

6. Flasche nach Anspruch 5, wobei die aromatischen Kohlenwasserstoffharze aus Alpha-Methylstyrol bestehen oder daraus derivatisiert sind.

7. Flasche nach einem der vorhergehenden Ansprüche, wobei das niedermolekular Harz ein derartiges Mn (zahlendurchschnittliches Molekulargewicht) aufweist, dass es weniger als 50 Wiederholungseinheiten aufweist.

8. Flasche nach einem der vorhergehenden Ansprüche, wobei das Material eine Zugspannungsgrenze zwischen 11 und 60 Nmm-² aufweist.

9. Flasche nach einem der vorhergehenden Ansprüche, hergestellt aus mehreren Schichten des Materials.

10. Flasche nach einem der vorhergehenden Ansprüche, wobei das Material ein oder mehrere Zusatzmittel ausgewählt aus der Gruppe bestehend aus UV-Inhibitoren, Antioxidationsmitteln, Fließmodifikatoren, Farbpigmenten und Aufhellern enthält.

11. Flasche nach einem der vorhergehenden Ansprüche, wobei die Glasübergangstemperatur des Materials steigt, wenn das amorphe thermoplastische Polymer mit dem einem oder den mehreren niedermolekularen Kohlenwasserstoff(en) gemischt wird.

12. Flasche nach einem der vorhergehenden Ansprüche, wobei das Material eine Glasübergangstemperatur von über 80°C aufweist.

13. Methode zum Herstellen einer Flasche aus einer oder mehreren Schichten eines Materials, das beim Zerbrechen in Fragmente zersplittert, die die menschliche Haut oder das menschliche Gewebe nicht schneiden, durchstechen oder auf andere Weise verletzen, wobei die Methode folgende Schritte umfasst: Mischen eines amorphen thermoplastischen Polymers und eines oder mehrerer niedermolekularer Harz(e), das bzw. die ein derartiges zahlendurchschnittliches Molekulargewicht (Mn) aufweisen, dass es bzw. sie weniger als 500 Wiederholungseinheiten aufweist bzw. aufweisen, das Zusetzen einer Sauerstoffsperre, die Acrylnitrilmethylacrylat-Copolymer umfasst, und das Bilden des Materials zur Gestalt der Flasche.

14. Methode nach Anspruch 13, wobei das amorphe thermoplastische Polymer aus der Gruppe ausgewählt wird bestehend aus Polystyrol (PS), Polymethylmethacrylat (PMMA), Styrol-Acrylnitril-Copolymer (SAN), linearen Polyestern und Copolyestern und Polycarbonat (PC).

15. Methode nach den Ansprüchen 13 oder 14, wobei das eine oder die mehreren niedermolekularen Harz(e) Kohlenwasserstoffharze ist bzw. sind.

16. Methode nach Anspruch 15, wobei die Kohlenwasserstoffharze aromatische Kohlenwasserstoffharze sind.

17. Methode nach Anspruch 16, wobei das amorphe thermoplastische Polymer Polystyrol ist und die aromatischen Kohlenwasserstoffharze aromatische C9-Kohlenwasserstoffharze sind.

18. Methode nach Anspruch 17, wobei die aromatischen Kohlenwasserstoffharze aus Alpha-Methylstyrol bestehen oder daraus derivatisiert sind.

19. Methode nach den Ansprüchen 13 bis 18, wobei das niedermolekulare Harz ein derartiges Mn (zahlendurchschnittliches Molekulargewicht) aufweist, dass es weniger als 50 Wiederholungseinheiten aufweist.

20. Methode nach Anspruch 13 bis 19, wobei die Glasübergangstemperatur Tg des Materials steigt, wenn das amorphe thermoplastische Polymer mit dem einen oder den mehreren niedermolekularen Kohlenwasserstoff(en) gemischt wird.

21. Methode nach Anspruch 20, wobei die Tg auf 5-10°C über diejenigen des Basispolymers steigt.

22. Methode nach den Ansprüchen 13 bis 21, umfassend den zusätzlichen Schritt des Zusetzens von einem oder mehreren Zusatzmitteln ausgewählt aus der Gruppe bestehend aus UV-Inhibitoren, Antioxidationsmitteln, Fließmodifikatoren, flammhemmenden Mitteln, Farbpigmenten und Aufhellern und Sauerstoff bindenden Mitteln.

23. Methode nach den Ansprüchen 13 bis 22, wobei das Material unter Anwendung von Spritzblas- und/oder Spritzgießstreckblastechniken zur erwünschten Gestalt geformt wird.

24. Methode nach Anspruch 13 bis 22, wobei das Material unter Anwendung des Extrusionsblasformens zur erwünschten Gestalt geformt wird.

## Revendications

1. Bouteille fabriquée à partir d'une matière qui, lorsqu'elle se brise, éclate en fragments qui ne provoquent pas de coupures, de perforations ou autre endommagement de la peau ou des tissus humains, la matière étant constituée d'un mélange composé de polymère thermoplastique amorphe et d'une ou de plusieurs résines à faible poids moléculaire dont le poids moléculaire moyen en nombre (Mn) est tel qu'elle comporte moins de 500 motifs de répétition, alors que la bouteille comporte une barrière contre l'oxygène comprenant un copolymère acrylonitrile-méthyle acrylate.

2. Bouteille selon la revendication 1, le polymère thermoplastique amorphe étant sélectionné à partir du groupe constitué des substances suivantes : polystyrène (PS), copolymère styrène-acrylonitrile (SAN), polyesters et copolyesters linéaires et polycarbonate (PC).

3. Bouteille selon l'une quelconque des revendications précédentes, ladite une résine ou lesdites plusieurs résines à faible poids moléculaire étant des résines d'hydrocarbures.

4. Bouteille selon la revendication 3, ladite une résine ou lesdites plusieurs résines à faible poids moléculaire étant des résines d'hydrocarbures aromatiques.

5. Bouteille selon la revendication 4, le polymère thermoplastique amorphe étant du polystyrène et les résines d'hydrocarbures aromatiques étant des résines d'hydrocarbures aromatiques C9.

6. Bouteille selon la revendication 5, les résines d'hydrocarbures aromatiques étant de l'alpha méthyl-styrène, ou étant dérivées de cette substance.

7. Bouteille selon l'une quelconque des revendications précédentes, la résine à faible poids moléculaire devant avoir un Mn (poids moléculaire moyen en nombre) tel qu'elle comporte moins de 50 motifs de répétition.

8. Bouteille selon l'une quelconque des revendications précédentes, la matière ayant une limite de contrainte de traction qui est comprise entre 11 et 60 Nmm⁻².

9. Bouteille selon l'une quelconque des revendications précédentes, qui est fabriquée à partir de couches multiples de la matière.

10. Bouteille selon l'une quelconque des revendications précédentes, la matière comportant un ou plusieurs additifs qui ont été sélectionnés à partir du groupe constitué des substances suivantes : inhibiteurs de rayonnement ultraviolet, antioxydants, modificateurs de fluidité, pigments colorants et azurants.

11. Bouteille selon l'une quelconque des revendications précédentes, la température de transition vitreuse de la matière s'accroissant au fur et à mesure que le polymère thermoplastique amorphe est mélangé avec ledit un hydrocarbure ou lesdits plusieurs hydrocarbures à faible poids moléculaire.

12. Bouteille selon l'une quelconque des revendications précédentes, la matière ayant une température de transition vitreuse qui est supérieure à 80°C.

13. Procédé servant à fabriquer une bouteille à partir d'une ou de plusieurs couches d'une matière qui, lorsqu'elle se brise, éclate en fragments qui ne provoquent pas de coupures, de perforations ou d'endommagement de la peau ou des tissus humains, le procédé comprenant les étapes consistant à : mélanger un polymère thermoplastique amorphe et une ou plusieurs résines à faible poids moléculaire dont le poids moléculaire moyen en nombre (Mn) est tel qu'elle comporte moins de 500 motifs de répétition, ajouter une barrière contre l'oxygène comprenant un copolymère acrylonitrile-méthyle acrylate, et façonner les matières pour que ceux-ci prennent la forme de la bouteille.

14. Procédé selon la revendication 13, le polymère thermoplastique amorphe étant sélectionné à partir du groupe constitué des substances suivantes : polystyrène (PS), polyméthyle méthacrylate (PMAA), copolymère styrène-acrylonitrile (SAN), polyesters et copolyesters linéaires et polycarbonate (PC).

15. Procédé selon les revendications 13 ou 14, ladite une résine ou lesdites plusieurs résines à faible poids moléculaire étant des résines d'hydrocarbures.

16. Procédé selon la revendication 15, les résines d'hydrocarbures étant des résines d'hydrocarbures aromatiques.

17. Procédé selon la revendication 16, le polymère thermoplastique amorphe étant du polystyrène et les résines d'hydrocarbures aromatiques étant des résines d'hydrocarbures aromatiques C9.

18. Procédé selon la revendication 17, les résines d'hydrocarbures aromatiques étant de l'alpha méthyl-styrène, ou étant dérivées de cette substance.

19. Procédé selon les revendications 13 à 18, la résine à faible poids moléculaire ayant un Mn (poids moléculaire moyen en nombre) tel qu'elle comporte moins de 50 motifs de répétition.

20. Procédé selon les revendications 13 à 19, la température de transition vitreuse Tg de la matière s'accroissant au fur et à mesure que le polymère thermoplastique amorphe est mélangé avec ladite une résine ou lesdites plusieurs résines d'hydrocarbures à faible poids moléculaire.

21. Procédé selon la revendication 20, cas dans lequel la température Tg passe à une valeur qui est supérieure de 5-10°C par rapport au polymère de base.

22. Procédé selon les revendications 13 à 21, comprenant l'étape supplémentaire consistant à ajouter un ou plusieurs additifs qui ont été sélectionnés à partir du groupe constitué des substances suivantes :
inhibiteurs de rayonnement ultraviolet, antioxydants, modificateurs de fluidité, agents retardateurs de flamme, pigments colorants et azurants et absorbeurs d'oxygène.

23. Procédé selon les revendications 13 à 22, la matière étant façonnée pour lui conférer la forme souhaitée suite à l'utilisation de techniques de moulage par injection-soufflage et/ou de moulage par injection avec étirage/soufflage.

24. Procédé selon les revendications 13 à 22, la matière étant façonnée pour lui conférer la forme souhaitée suite à l'utilisation du moulage par extrusion-soufflage.
